## Europäisches Patentamt
## European Patent Office
## Office européen des brevets

(19)

(11) Veröffentlichungsnummer: **0 233 334**
**B1**

(12) **EUROPÄISCHE PATENTSCHRIFT**

(45) Veröffentlichungstag der Patentschrift: **23.01.91**

(51) Int. Cl.⁵: **A 61 C 17/02, A 61 H 13/00**

(21) Anmeldenummer: **86116451.5**

(22) Anmeldetag: **27.11.86**

(54) **Munddusche.**

(30) Priorität: **04.02.86 DE 3603282**

(43) Veröffentlichungstag der Anmeldung:
**26.08.87 Patentblatt 87/35**

(45) Bekanntmachung des Hinweises auf die
Patenterteilung:
**23.01.91 Patentblatt 91/04**

(84) Benannte Vertragsstaaten:
**AT CH DE FR LI**

(56) Entgegenhaltungen:
**DE-A-3 342 420**
**DE-U-7 327 527**
**DE-U-8 014 400**
**US-A-4 182 354**

(73) Patentinhaber: **Petz, Günter**
**Flachslander Strasse 8**
**D-8500 Nürnberg (DE)**

(72) Erfinder: **Petz, Günter**
**Flachslander Strasse 8**
**D-8500 Nürnberg (DE)**

(74) Vertreter: **Göbel, Matthias, Dipl.-Ing.**
**Pruppacher Hauptstrasse 5-7**
**D-8501 Pyrbaum-Pruppach (DE)**

## Beschreibung

Die Erfindung betrifft eine Munddusche mit einer durch einen Elektromotor antreibbaren Förderpumpe für das Duschmedium, die über eine Zulaufleitung permanent an einem Vorratsbehälter anliegt und über eine Ablaufleitung an ein Handstück mit Düse fördert, bei der das Handstück ein durch ein Stellorgan betätigbares Steuerventil zum wahlweisen Öffnen oder Schließen der Ablauföffnung aufweist und bei der die Ablauföffnung an einer Abzweigung ein überdruckventil mit einem zum Ventilsitz verschieblichen Verschlußstück aufweist, das in der Offenstellung des Steuerventils entgegen dem Ablaufdruck in Schließstellung gehalten und in der Schließstellung des Steuerventils durch Aufbau des Ablaufdrucks in die Offenstellung beweg- und haltbar ist und die Abzweigung über einen Bypass mit der Zulaufleitung verbindet.

Bei einer bekannten Munddusche (DE-U-8 014 400) vorgenannter Art liegt an einer zwischen Förderpumpe und Spritzdüse vorgesehenen Schlauchleitung ein überdruckventil mit einem im wesentlichen kegeligen Verschlußstück an. Der Abgang des überdruckventils steht mit der Zulaufleitung der Förderpumpe in Verbindung. Bei Druckanstieg in der Schlauchleitung durch Reduzierung oder Unterbrechung der Durchtrittsmenge an der Spritzdüse spricht das überdruckventil an und verbindet den Abgang des Überdruckventils mit der Zulaufleitung. Die Öffnungsbewegungen des Verschlußstücks ergeben dabei störende Schlaggeräusche. Außerdem ist bei bekannter Munddusche beim Öffnen der Spritzdüse jeweils der in der Ablaufleitung anstehende maximale Druck durch das dortige Verschlußstück zu überwinden.

Die Erfindung hat zur Aufgabe Maßnahmen zur Geräuschminderung zu schaffen und die Öffnungs- und Schließbewegungen des Verschlußstücks empfindlicher zu machen.

Erfindungsgemäß ist diese Aufgabe dadurch gelöst, daß das Verschlußstück des überdruckventils durch einen Kolben gebildet ist, der in Offenstellung des Steuerventils durch Federkraft an den Ventilsitz anleg- und haltbar ist, in Schließstellung des Steuerventils durch Druckaufbau in der Ablaufleitung entgegen Federkraft vom Ventilsitz anlüftbar ist und angelüftet durch Beaufschlagung der dem Ventilsitz zugewandten Stirnfläche insgesamt durch den Ablaufdruck entgegen Federkraft in die Offenstellung verschiebbar ist.

Bevorzugt ist die Federkraft durch eine Schraubenfeder aufbringbar, deren Größe so abgestimmt ist, daß in Offend stellung des Steuerventils die Federkraft großer als der Ablaufdruck, jedoch kleiner als der Druckaufbau in der Ablaufleitung bei geschlossenem Steuerventil ist.

Hierdurch sind die Voraussetzungen zu Ein-Aus-Schaltungen des Steuerventils im Handstück bei verringertem Druck gegeben, wodurch auch störende Schlaggeräusche entfallen. Es versteht sich, daß zum Anlegen des Verschlußstücks bereits eine geringe Federkraft ausreicht, während mit dem Anlüften des Verschlußstücks, also mit beginnendem Druckaufbau, die ganze Querschnittsfläche dem Ablaufdruck ausgesetzt ist, wodurch ein schnelles Öffnen des Ventils zur Verbindung von Ablauf- und Zulaufleitung über den Bypass erfolgen kann. Es entspricht der Erfindung, daß das Verschlußdtück beliebig, z.B. als Kolben oder als Scheibe ausgeführt sein kann.

Die Erfindung ist in der Zeichnung anhand eines Ausführungsbeispiels verdeutlicht. Es zeigen:

Fig. 1 eine Munddusche schematisch, teilweise im Schnitt,

Fig. 2 ein Ventil in Offenstellung, im Schnitt vergrößert,

Fig. 3 einen Schnitt nach der Linie III—III der Fig. 4 und

Fig. 4 ein Ventil angelüftet, im Schnitt, vergrößert.

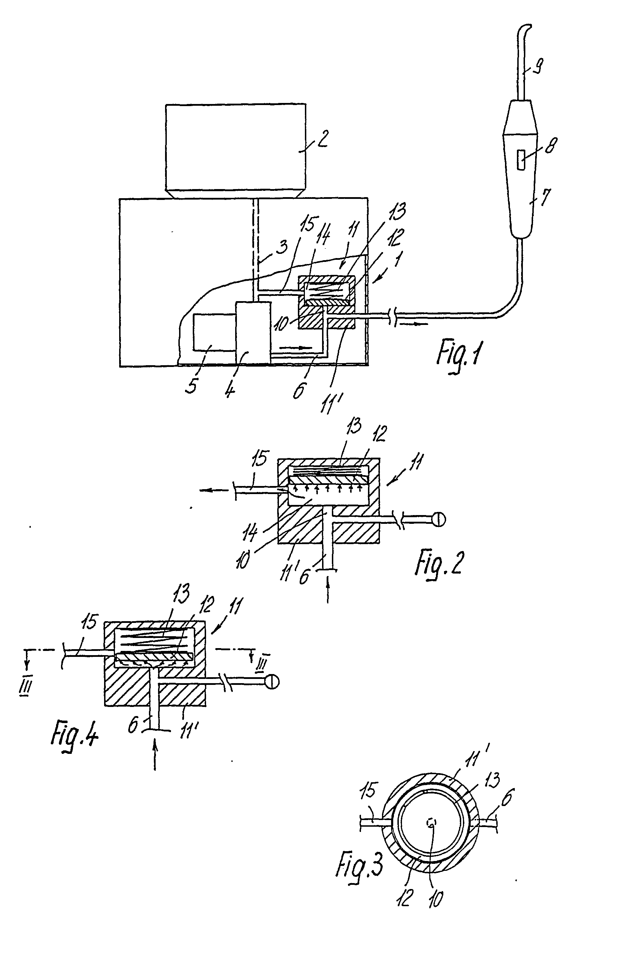

In den Figist mit 1 ein Mundduschengehäuse bezeichnet, auf dem ein Vorratsbehälter 2 für Duschmedium abnehmbar aufgestellt ist. Der Vorratsbehälter 2 steht über eine Zulaufleitung 3 mit einer Förderpumpe 4 in Verbindung, die durch einen Elektromotor 5 antreibbar ist. Mit 6 ist die Ablaufleitung für das Duschmedium bezeichnet, die an ein Handstück 7 mit Ein- Ausschalter (nicht gezeigt), der von außen durch einen Schieber 8 betätigbar ist, ausmündet. Das Handstück 7 trägt ein Düsenrohr 9. Der Ablaufleitung 6 ist an einer Abzweigung 10 ein Ventil 11 zugeordnet. Das Ventil 11 weist ein verschiebliches Verschlußstück 12 auf, das als Scheibe oder als Kolben ausgebildet ist und die Abzweigung 10 entsprechend seiner Stellung schließt oder öffnet. Das Verschlußstück 12 ist entgegen der Kraft einer Schraubenfeder 13 im Ventilgehäuse 11' untergebracht und aus der Stellung der Fig. 1 in die Stellung der Fig. 2 verschiebbar. Der Innenraum 14 des Ventilgehäuses 11' steht über einen Bypass 15 mit der Zulaufleitung 3 in ständiger Verbindung.

In der Stellung des Verschlußstücks 12 der Fig. 1 ist die Ablaufleitung 6 mittels des Schiebers 8 offen und bei Betrieb der Förderpumpe 4 kann Duschmedium aus dem Düsenrohr 9 austreten. Die Abzweigung 10 ist dabei durch das Verschlußstück 12 verschlossen. Bei Schließen der Ablaufleitung 6 durch entsprechende Betätigung des Schiebers 8 erfolgt ein Druckaufbau in der Ablaufleitung 6, der zu einem Anlüften des Verschlußstückes 12 (Fig. 4) führt. Der Ablaufdruck wird nunmehr an der gesamten Querschnittsfläche des Verschlußstücks 12 wirksam und verschiebt das Verschlußstück 12 in die Stellung der Fig. 2. Hierbei wird die Ablaufleitung 6 über den Innenraum 14 des Ventilgehäuses 11' und dem Bypass 13 an die Zulaufleitung 3 gelegt.

## Patentansprüche

1. Munddusche mit einer durch einen Elektromotor (5) antreibbaren Förderpumpe (4) für das Duschmedium, die über eine Zulaufleitung (3) permanent an einem Vorratsbehälter (2) anliegt und über eine Ablaufleitung (6) an ein Handstück (7) mit Düse fördert, bei der das Handstück (7) ein durch ein Stellorgan (8) betätigbares Steuerventil zum wahlweisen Öffnen oder Schließen der Ablauföffnung (6) aufweist, daß die Ablauföffnung (6) an einer Abzweigung (10) ein überdruckventil (11) mit einem zum Ventilsitz verschieblichen Verschlußstück (12) aufweist, das in der Offenstellung des Steuerventils entgegen dem Ablaufdruck in Schließstellung gehalten und in der Schließstellung des Steuerventils durch Aufbau des Ablaufdrucks in die Offenstellung beweg- und haltbar ist und die Abzweigung (10) über einen Bypass (15) mit der Zulaufleitung (3) verbindet, dadurch gekennzeichnet, daß das Verschlußstück (12) des überdruckventils (11) durch einen Kolben gebildet ist, der in Offenstellung des Steuerventils durch Federkraft (13) an den Ventilsitz anleg- und haltbar ist, in Schließstellung des Steuerventils durch Druckaufbau in der Ablaufleitung (6) entgegen Federkraft (13) vom Ventilsitz anlüftbar ist und angelüftet durch Beaufschlagung der dem Ventilsitz zugewandten Stirnfläche insgesamt durch den Ablaufdruck entgegen der Federkraft (13) in die Offenstellung verschiebbar ist.

2. Munddusche nach Anspruch 1, dadurch gekennzeichnet, daß als Verschlußstück (12) für das Überdruckventil (11) eine entgegen Federkraft (13) bei Druckaufbau in der Ablaufleitung (6) anlüftbare und angelüftet durch den auf der dem Ventilsitz zugewandten Stirnfläche wirksamen Ablaufdruck aus der Schließ- in die Offenstellung überführbare Scheibe dient.

**Revendications**

1. Douchette buccale comportant une pompe d'alimentation (4) pour le milieu de lavage, qui peut être actionnée par un moteur électrique (5) et qui est reliée, de façon permanente, à un réservoir (2) par une conduite d'alimentation (3) et à un porte-outil (7) à buse par une conduite d'écoulement (6), le porte-outil (7) présentant une soupape de commande, qui peut être actionnée par un organe de réglage (8), pour ouvrir ou fermer, au choix, la conduite d'écoulement (6), la conduite d'écoulement (6) présentant, sur une dérivation (10), une soupape de surpression (11) ayant un obturateur (12) déplaçable par rapport au siège de soupape, qui, dans la position ouverte de la soupape de commande, est maintenu en position fermée contre la pression d'écoulement et, dans la position fermée de la soupape de commande, peut être déplacé et maintenu dans la position ouverte par accumulation de la pression d'écoulement, et la dérivation (10) étant reliée à la conduite d'alimentation (3) par un bipasse (15), caractérisée en ce que l'obturateur (12) de la soupape de surpression (11) est formé par un piston qui, dans la position ouverte de la soupape de commande, peut être amené et maintenu contre le siège de soupape par effet de ressort (13), et, dans la position fermée de la soupape de commande, peut être soulevé du siège de soupape, par accumulation depression dans la conduite d'écoulement (6), contre l'effet de ressort (13), et, soulevé, peut être déplacé dans la position ouverte contre l'effet de ressort (13), par la pression d'écoulement, en totalité, par sollicitation de la face frontale proche du siège de soupape.

2. Douchette buccale selon la revendication 1, caractérisée en ce qu'un disque, qui peut être amené de la position fermée à la position ouverte, soulevable contre l'effet de ressort (13) lors de l'accumulation de pression dans la conduite d'écoulement (6) et soulevé par la pression d'écoulement agissant sur la face frontale proche du siège de soupape, sert d'obturateur (12) pour la soupape de surpression (11).

**Claims**

1. An oral spray with a feed pump (4) for the spray medium drivable by an electric motor (5), said feed pump (4) being permanently fitted via a feed pipe (3) to a reservoir (2), and conveying medium via an outlet pipe (6) to a handpiece (7) with a nozzle, in which the handpiece (7) has a control valve, activable by a servo unit (8), for selectable opening or closing of the outlet opening (6), that the outlet opening (6) has on a branch (10) a relief valve (11) with a closure part (12) movable towards the valve seat, said closure part (12), in the open position of the control valve, being held in the closed position against the outlet pressure, and in the closed position of the control valve, being movable into and retainable in the open position by build-up of the outlet pressure, and connecting the branch (10) with the feed pipe (3) via a bypass (15), characterised in that the closure part (12) of the relief valve (11) is formed by a piston which, in the open position of the control valve, may be applied against and held against the valve seat by spring action (13), and in the closed position of the control valve may be lifted off the valve seat against the spring action (13) by means of pressure build-up in the outlet pipe (6) and, once lifted off, may be moved into the open position against the spring action (13) by impingement of the outlet pressure on the overall frontal surface facing the valve seat.

2. An oral spray according to Claim 1, characterised in that a disc, which may be lifted against the spring action (13) during pressure build-up in the outlet pipe (6), and, once lifted off, may be transferred from the closed into the open position by the outlet pressure acting on the frontal surface facing the valve seat, serves as a closure part (12) for the relief valve (11).

EP 0 233 334 B1

Fig.1

Fig.2

Fig.4

Fig.3